# EUROPÄISCHE PATENTSCHRIFT

(11) **EP 2 616 657 B1**
(45) Veröffentlichungstag und Bekanntmachung des Hinweises auf die Patenterteilung: **27.05.2015**
(21) Anmeldenummer: 11752198.9
(22) Anmeldetag: 31.08.2011
(51) Int. Cl.: F02M 25/07

(54) **KÜHLANORDNUNG**
COOLER ARRANGEMENT
DISPOSITIF DE REFROIDISSEMENT

(30) Priorität: 14.09.2010 DE 102010045259
(43) Veröffentlichungstag der Anmeldung: 24.07.2013
(73) Patentinhaber: Pierburg GmbH, 41460 Neuss (DE)
(72) Erfinder: KÜHNEL, Hans-Ulrich, 41239 Mönchengladbach (DE); CORBACH, Peter, 44795 Bochum (DE); HÜSGES, Hans-Jürgen, 47877 Willich (DE)
(74) Vertreter: Patentanwälte ter Smitten Eberlein Rütten Partnerschaftsgesellschaft
(86) Internationale Anmeldenummer: PCT/EP2011/065050
(87) Internationale Veröffentlichungsnummer: WO 2012/034866

(56) Entgegenhaltungen:
- EP-A2- 2 378 092
- WO-A1-2009/022113
- DE-A1-102007 049 336
- US-B1- 6 216 677

## Beschreibung

Die Erfindung betrifft eine Kühlanordnung zum Anschluss an einen Abgaskrümmer oder einen Abgasauslass eines Motorblocks einer Verbrennungskraftmaschine mit einem Abgaskühler mit einem Abgaskanal und einem Kühlmittelmantel, wobei der Abgaskühler über einen Vorkühler am Motorblock oder am Abgaskrümmer befestigt ist, einem Abgasrückführventil, mittels dessen der Abgasstrom regelbar ist und einem Aktuator, über den das Abgasrückführventil betätigbar ist und welcher an der zum Abgaskühler entgegengesetzten Seite des Abgasrückführventils angeordnet ist.

Zur einfacheren Montage und aufgrund ihres verringerten Platzbedarfs sind in den letzten Jahren vermehrt Abgaskühlmodule entwickelt worden, bei denen vor oder hinter einem Abgaskühler ein Abgasrückführventil in einem Ventilgehäuse angeordnet ist, welches mit dem Abgaskühler eine Baueinheit bildet, die gemeinsam direkt an den Auslassbereich des Motorblocks oder des Abgaskrümmers des Verbrennungsmotors angeschlossen werden, um die Anzahl der benötigten Rohrleitungen im Motorraum zu verringern.

So ist aus der EP 1 643 097 A1 ein Abgaskühlmodul bekannt, bei dem ein Wärmetauschergehäuse an einer Flanschplatte befestigt wird, über die Kühlmittelkanäle des Gehäuses mit dem Kühlmittelkreislauf des Verbrennungsmotors verbunden sind. Ein Ventilgehäuse wird über einen Flansch am Wärmetauschergehäuse befestigt und ragt in einen Abgaseinlassbereich des Wärmetauschers hinein, der vor der eigentlichen Kühlstrecke angeordnet ist, jedoch in dem bereits Kühlkanäle ausgebildet sind, die das Ventilgehäuse umgeben. Dieser Einlassabschnitt dient entsprechend zur Kühlung des Ventilkörpers. Nachteilig ist jedoch, dass eine thermische Trennung zum Aktuator nicht gegeben ist, sondern dessen Gehäuse weiter einer hohen thermischen Belastung, insbesondere aufgrund von Wärmestrahlung vom Motorblock, ausgesetzt ist. Da an dieser Position jedoch sehr hohe Temperaturen von etwa 700°C vorliegen, besteht insbesondere bei der Verwendung elektrischer Steller das Problem einer zu hohen thermischen Belastung des Aktuators, was sowohl zu Ungenauigkeiten in der Positionsregelung als auch zum Ausfall des Aktuators und somit des Ventils führen kann.

Ein weiteres Kühlmodul ist aus der WO 2009/047278 A1 bekannt. Dieses weist ebenfalls einen Abgaskühler sowie ein Bypassventil und ein Abgasrückführventil auf, welche mit dem Gehäuse des Abgaskühlers über ein Verteilergehäuse verbunden sind. Zur Kühlung des Abgasrückführventils weist das Verteilergehäuse Kühlmittelkanäle auf. Der Aktuator ist an einer zum Motorblock entfernten Seite des Moduls angeordnet, so dass eine Abschirmung über das Verteilergehäuse erfolgt. Allerdings liegt in dieser Ausführung ein erhöhter Platzbedarf in der vom Motorblock entfernten Richtung vor. Hier ist jedoch in modernen Verbrennungsmotoren häufig kein zusätzlicher Raum.

Zusätzlich ist aus der DE 10 2007 049 336 A1 ein Modul bekannt, in dem Abgas- und Kühlmittelleitungen ausgebildet sind und welches an einem Motorblock befestigt wird. An dem Modul wird ein Abgasrückführventil sowie an einer gegenüberliegenden Seite des Moduls ein Abgaskühler befestigt, die über das Modul mit Kühlmittel und Abgas aus dem Motorblock versorgt werden. Ein Schutz des Abgasrückführventils vor Überhitzung soll durch im Modul zum Abgasrückführventil verlaufende Kühlmittelkanäle erreicht werden. Diese schützen jedoch lediglich das Ventil selbst, während der Aktuator in unmittelbarer Nachbarschaft zum heißen Motorblock angeordnet ist, so dass die Gefahr einer Überhitzung besteht.

Es ist daher Aufgabe der Erfindung, eine Kühlanordnung bereitzustellen, mit welcher die Funktion des Aktuators über eine lange Lebensdauer sichergestellt werden kann und gleichzeitig eine möglichst geringe Ausdehnung zur vom Motorblock entfernten Seite vorhanden ist, so dass die Kühlanordnung in vollständiger Nähe im zur Verfügung stehenden Raum am Motorblock oder am Abgaskrümmer angeordnet werden kann.

Diese Aufgabe wird durch eine Kühlanordnung mit den Merkmalen des Hauptanspruchs gelöst.

Dadurch, dass ein mit dem Kühlmittelmantel des Abgaskühlers fluidisch verbundener Kühlmittelkanalabschnitt zwischen dem Abgaskrümmer oder dem Motorblock und dem Aktuator des Abgasrückführventils angeordnet ist, erfolgt eine thermische Trennung zwischen Motorblock beziehungsweise Abgaskrümmer und Aktuator. So kann der Aktuator in unmittelbarer Nähe zum Motorblock angeordnet werden. Der Montageaufwand wird ebenfalls nicht erhöht. Dabei ist in Strömungsrichtung des Abgases zwischen dem Abgaskühler und dem Abgaskrümmer oder dem Motorblock ein Vorkühler angeordnet, in dessen Vorkühlergehäuse zumindest ein Kühlmittelkanal ausgebildet ist, über den der Kühlmittelkanalabschnitt, der im Vorkühlergehäuse ausgebildet ist, mit dem Kühlmittelmantel des Abgaskühlers verbunden ist. So lässt sich die gesamte Kühlmittelversorgung direkt an den Kühlmittelkanal eines angeschlossenen Wärmetauschers verwirklichen, ohne zusätzliche Schlauchleitungen verwenden zu müssen. Gleichzeitig besteht eine effektive Kühlleistung im Bereich der Klappe oder der Klappen, wodurch Standardlager, -hebel und -federn verwendet werden können. Trotz der Anbindung direkt am Abgaskrümmer kann durch diese effektive Kühlung direkt am Ausgangspunkt der Hitze die Belastung aller nachfolgenden Bauteile reduziert werden. Zusätzliche Bauteile zur Verwirklichung der thermischen Trennung des Aktuators müssen nicht verwendet werden. Schlauchleitungen innerhalb des Moduls werden ebenfalls nicht benötigt. Um eine Strömung im Kühlmittelkanalabschnitt sicherzustellen und somit die Kühlwirkung zu erhöhen, sind zwei Kühlmittelkanalabschnitte zwischen dem Motorblock oder dem Abgaskrümmer und dem Aktuator ausgebildet, die über einen Verbindungskanal fluidisch miteinander verbunden sind. Im ersten der beiden Abschnitte findet die Vorströmung des Kühlmittels, im zweiten die Rückströmung statt.

Vorteilhafterweise ist im Vorkühlergehäuse zumindest ein Abgaskanal mit einer 90°-Umlenkung und an zwei entgegengesetzten Seiten des zumindest einen Abgaskanals jeweils zumindest ein Kühlmittelkanal ausgebildet, so dass nachfolgende Bauteile, wie der Wärmetauscher, parallel zum Motorblock angeordnet werden können, wodurch die Ausdehnung der Kühlanordnung zur vom Motorblock entfernten Seite auf ein Minimum reduziert wird. Gleichzeitig findet eine zuverlässige Vorkühlung des Abgases sofort beim Eintritt in die Kühlanordnung statt.

Vorzugsweise erstreckt sich der zumindest eine Kühlmittelkanal im Vorkühlergehäuse vom Kühlmittelkanalabschnitt zwischen dem Motorblock oder dem Abgaskrümmer und dem Aktuator entlang der 90°-Umlenkung im Vorkühlergehäuse zum Kühlmittelmantel an der zum Abgaskrümmer oder zum Motorblock entfernten Seite des Abgaskühlers. Hierdurch wird das einströmende Abgas über die gesamte Einströmlänge im Vorkühler zuverlässig gekühlt. Des Weiteren entsteht eine zusätzliche thermische Trennung des Aktuators in Richtung des Vorkühlergehäuses, wodurch dessen thermische Belastung weiter reduziert wird.

Um den Montageaufwand weiter zu reduzieren, ist das Abgasrückführventil ein Klappenventil, dessen Drehwelle im Vorkühlergehäuse gelagert ist. Das Vorkühlergehäuse ist damit gleichzeitig Lagergehäuse der Klappe, wodurch zusätzliche Befestigungsflächen entfallen.

Es wird somit eine Kühlanordnung geschaffen, die vollständig in unmittelbarer Nähe zum Abgaskrümmer oder Motorblock angeordnet werden kann, ohne die Gefahr einer thermischen Überlastung des Aktuators einzugehen. Anschlussleitungen zwischen den Bauteilen können sowohl für den Kühlmittelkreislauf als auch zur Führung des Abgases entfallen. Die Bauteileanzahl wird auf ein Minimum reduziert, so dass der Montageaufwand sehr gering gehalten werden kann. Die Kühlanordnung kann direkt an den Abgaskrümmer oder einen Abgasauslass eines Motorblocks befestigt werden. Aufgrund der guten Kühlwirkung dieser Anordnung können kostengünstigere Materialien verwendet werden, da der Kühlwirkungsgrad einer derartigen Anordnung im Vergleich zu bekannten Ausführungen erhöht ist. Auch ist es denkbar, den nachfolgenden Kühler aufgrund der guten Kühlwirkung des Vorkühlers kleiner zu bauen.

Ein Ausführungsbeispiel einer erfindungsgemäßen Kühlanordnung ist in den Figuren dargestellt und wird nachfolgend beschrieben.
Figur 1 zeigt eine Seitenansicht eines Ausschnitts einer erfindungsgemäßen Kühlanordnung in geschnittener Darstellung.
Figur 2 zeigt eine Kopfansicht des Vorkühlers der erfindungsgemäßen Kühlanordnung der Figur 1 als Draufsicht.

Der in den Figuren dargestellte Ausschnitt der erfindungsgemäßen Kühlanordnung weist einen Vorkühler 2 mit einem Vorkühlergehäuse 4 sowie ein im Vorkühlergehäuse 4 gelagertes Abgasrückführventil 6 auf, welches aus zwei auf einer gemeinsamen Welle 8 drehfest angeordneten Klappenkörpern 10 besteht, von denen einer in der Schnittansicht erkennbar ist. Die Welle 8 ist über ein Gestänge mit einem Aktuator 12 verbunden.

Das Vorkühlergehäuse 4 weist einen ersten Flansch 14 auf, welcher als Abgaseintritt in die Kühlanordnung dient und über den das Vorkühlergehäuse 4 direkt an einen nicht dargestellten Motorblock oder Abgaskrümmer befestigt werden kann. Dieser Abgaseintritt ist zweigeteilt und führt in einen ebenfalls zweigeteilten Abgaskanal 16 im Vorkühlergehäuse 4, deren Durchströmungsquerschnitte jeweils von einem der beiden Klappenkörper 10 regelbar ist.

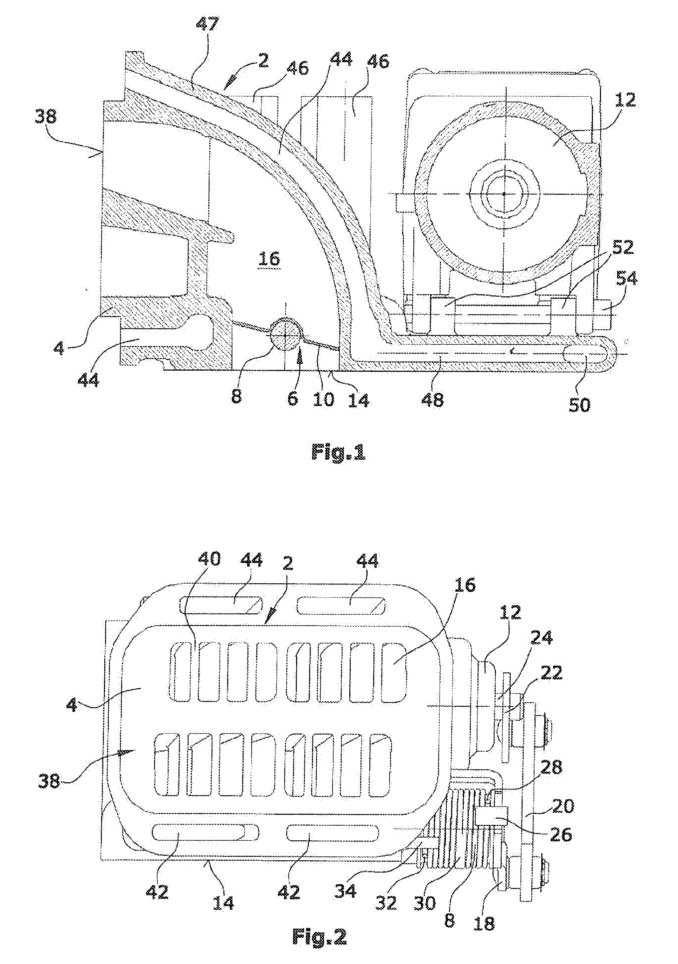

Die Welle 8 ragt mit einem Ende aus dem Vorkühlergehäuse 4 seitlich heraus, wie in Figur 2 zu erkennen ist. Auf diesem Ende ist ein Exzenter 18 drehfest angeordnet, der über einen Hebel 20 mit einem zweiten Exzenter 22 gekoppelt ist und welche das Gestänge bilden. Der Exzenter 22 ist drehfest auf einer Antriebswelle 24 des elektromotorischen Aktuators 12 angeordnet, so dass eine Drehbewegung des Aktuators 12 auf die Welle 8 des Abgasrückführventils 6 übertragen wird.

Am Exzenter 18 ist des Weiteren ein Anschlagelement 26 ausgebildet, gegen welches ein erster Endschenkel 28 einer Rückstellfeder 30 anliegt, welche die Welle 8 umgibt. Diese Rückstellfeder 30 ist als Schraubenfeder ausgeführt, welche die Welle 8 in die Schließstellung der beiden Klappenkörper 10 in bekannter Weise vorspannt. Hierzu liegt ein am anderen Ende der Schraubenfeder ausgebildeter Federschenkel 32 gegen einen Anschlag 34 am Vorkühlergehäuse 4 an.

Der Abgaskanal 16 beziehungsweise die beiden parallel verlaufenden Abgaskanäle 16 setzen sich im Vorkühlergehäuse 4 fort und erfahren eine Umlenkung um 90°, so dass ein Abgasaustritt aus dem Vorkühlergehäuse 4, der in einem zweiten Flansch 38 ausgebildet ist, senkrecht zum Abgaseintritt des ersten Flansches 14 angeordnet ist. In Figur 2 ist zu erkennen, dass sich die beiden Abgaskanäle 16 im Verlauf des Vorkühlergehäuses 4 in mehrere Abgaskanäle aufteilen, zwischen denen jeweils Wände 40 ausgebildet sind, welche durch den Anschluss eines nicht dargestellten Abgaskühlers ebenso verlängert werden wie im äußeren Bereich angeordnete Kühlmittelkanäle 42, 44, mit einem Kühlmittelmantel des Abgaskühlers verbunden werden, welcher an den Kühlmittelkreislauf der Verbrennungskraftmaschine angeschlossen ist. Der Abgaskühler wird üblicherweise an den Vorkühler 2 angeschweißt.

Das Vorkühlergehäuse 4 wird über Schrauben am Motorblock befestigt. Hierzu sind am Vorkühlergehäuse 4 mehrere Dome 46 mit Durchgangslöchern ausgebildet, in die die Schrauben zur Befestigung gesteckt werden können.

Damit das Vorkühlergehäuse 4 seine Kühlfunktion übernehmen kann, sind im Vorkühlergehäuse 4 die Kühlmittelkanäle 42, 44 ausgebildet, von denen zwei parallele Kühlmittelkanäle 42 im Bereich zwischen dem Abgaskanal des Abgaskühlers und dem Motorblock verlaufen und zwei Kühlmittelkanäle 44 an der zum Motorblock entfernten Seite des Abgaskühlers verlaufen.

Während der Kühlmittelkanal 42 parallel zur Oberfläche des ersten Flansches 14 verläuft, weisen die Kühlmittelkanäle 44 wie die Abgaskanäle 16 eine 90°-Umlenkung auf, das heißt sie verlaufen parallel zu den Abgaskanälen 16 an einer Außenwand 47 des Vorkühlergehäuses 4. Entsprechend bieten die Kühlmittelkanäle 44 eine Abschirmung der Abgaskanäle 16 zum Aktuator 12.

Erfindungsgemäß weisen die Kühlmittelkanäle 44 einen Kühlmittelkanalabschnitt 48 auf, der im Bereich zwischen dem Aktuator 12 und dem Motorblock angeordnet ist und parallel zum ersten Flansch 14 über die gesamte Länge des Aktuators 12 verläuft. Diese im vorliegenden Ausführungsbeispiel zwei Kühlmittelkanalabschnitte 48 sind über einen Verbindungskanal 50 fluidisch miteinander verbunden, so dass im ersten Kühlmittelkanalabschnitt 48 eine Vorströmung und im gegenüberliegenden eine Rückströmung des Kühlmittels stattfindet, wodurch Totwassergebiete zuverlässig vermieden werden können.

An diesem Abschnitt des Vorkühlergehäuses 4 sind des Weiteren vier Augenlager 52 an der Oberfläche ausgebildet, über die der Aktuator 12 mittels zweier Schrauben 54, die durch je zwei gegenüberliegende Augenlager 52 geschoben werden, am Vorkühlergehäuse 4 befestigt wird.

Somit wird durch die erfindungsgemäße Kühlanordnung eine vollständige thermische Abschirmung des Aktuators 12 sowohl gegenüber dem Motorblock als auch gegenüber dem Abgaskanal 16 der Kühlanordnung erreicht, so dass eine zuverlässige Funktionalität des Aktuators 12 über eine lange Lebensdauer sichergestellt werden kann. Sowohl im Bereich des ersten Flansches 14, an dem der Wärmeeintrag am höchsten ist, als auch im übrigen Vorkühlergehäuse 4 kann durch die erfindungsgemäße Kühlanordnung eine hohe Wärmeabfuhr über das Kühlmittel erzielt werden, so dass gute Kühlwirkungsgrade folgen. Des Weiteren können kostengünstigere Materialien für die Gehäuse verwendet werden. Durch diese gute Kühlwirkung des Vorkühlers bei gleichzeitiger Unterbringung eines Abgasrückführventils oder auch einer Bypassklappe kann ein nachfolgender Wärmetauscher deutlich kleiner gebaut werden, da die Temperatur direkt am Eintritt in hohem Maße abgeführt wird. Der vorgeschlagene Aufbau eignet sich auch bei großen Strömungsmengen, wie sie insbesondere in Nutzfahrzeugen auftreten. Sonst notwendige Rohrleitungen können entfallen.

Es sollte deutlich sein, dass innerhalb des Schutzbereiches des Hauptanspruchs im Vergleich zum beschriebenen Ausführungsbeispiel verschiedene Modifikationen möglich sind. Insbesondere können verschiedene Ventile in den Vorkühler integriert werden. Auch ist die Herstellung und konstruktive Ausgestaltung der Gehäuseteile je nach Anwendung modifizierbar. So kann beispielsweise der erste Flansch als separates Bauteil mit dem Abgasrückführventil an das Vorkühlergehäuse geflanscht werden. Auch kann je nach Anwendung die Anzahl der Kühlmittelkanäle und Abgaskanäle variiert werden, insbesondere lediglich ein Abgaskanal im Gehäuse ausgebildet werden, ohne den Schutzbereich des Hauptanspruchs zu verlassen.

## Patentansprüche

1. Kühlanordnung zum Anschluss an einen Abgaskrümmer oder einen Abgasauslass eines Motorblocks einer Verbrennungskraftmaschine mit
einem Abgaskühler mit einem Abgaskanal und einem Kühlmittelmantel, wobei der Abgaskühler über einen Vorkühler (2) am Motorblock oder am Abgaskrümmer befestigt ist,
einem Abgasrückführventil (6), mittels dessen der Abgasstrom regelbar ist und
einem Aktuator (12), über den das Abgasrückführventil (6) betätigbar ist und welcher an der zum Abgaskühler entgegengesetzten Seite des Abgasrückführventils (6) angeordnet ist,
**dadurch gekennzeichnet, dass**
ein mit dem Kühlmittelmantel des Abgaskühlers fluidisch verbundener Kühlmittelkanalabschnitt (48) zwischen dem Abgaskrümmer oder dem Motorblock und dem Aktuator (12) des Abgasrückführventils (6) angeordnet ist, wobei in Strömungsrichtung des Abgases zwischen dem Abgaskühler und dem Abgaskrümmer oder dem Motorblock der Vorkühler (2) angeordnet ist, in dessen Vorkühlergehäuse (4) zumindest ein Kühlmittelkanal (42, 44) ausgebildet ist, über den der Kühlmittelkanalabschnitt (48), der im Vorkühlergehäuse (4) ausgebildet ist, mit dem Kühlmittelmantel des Abgaskühlers verbunden ist.

2. Kühlanordnung nach Anspruch 1,
**dadurch gekennzeichnet, dass**
zwei Kühlmittelkanalabschnitte (48) zwischen dem Motorblock oder dem Abgaskrümmer und dem Aktuator (12) ausgebildet sind, die über einen Verbindungskanal (50) fluidisch miteinander verbunden sind.

3. Kühlanordnung nach einem Ansprüche 1 bis 2,
**dadurch gekennzeichnet, dass**
im Vorkühlergehäuse (4) zumindest ein Abgaskanal (16) mit einer 90°-Umlenkung und an zwei entgegengesetzten Seiten des zumindest einen Abgaskanals (16) jeweils zumindest ein Kühlmittelkanal (42, 44) ausgebildet ist.

4. Kühlanordnung nach einem der vorhergehenden Ansprüche,
**dadurch gekennzeichnet, dass**
sich der zumindest eine Kühlmittelkanal (44) im Vorkühlergehäuse (4) vom Kühlmittelkanalabschnitt (48) zwischen Motorblock oder Abgaskrümmer und Aktuator (12) entlang der 90°-Umlenkung im Vorkühlergehäuse (4) zum Kühlmittelmantel an der zum Abgaskrümmer oder zum Motorblock entfernten Seite des Abgaskühlers erstreckt.

5. Kühlanordnung nach einem der vorhergehenden Ansprüche,
**dadurch gekennzeichnet, dass**
das Abgasrückführventil (6) ein Klappenventil ist, dessen Welle (8) im Vorkühlergehäuse (4) gelagert ist.

## Claims

1. A cooler arrangement for connection to an exhaust gas manifold or to an exhaust gas outlet of an engine block of an internal combustion machine, comprising:
an exhaust gas cooler comprising an exhaust gas duct and a coolant jacket, the exhaust gas cooler being mounted at the engine block or at the exhaust gas manifold via a pre-cooler (2),
an exhaust gas recirculation valve (6) by which an exhaust gas flow can be regulated, and
an actuator (12) via which the exhaust gas recirculation valve (6) can be actuated and which is arranged on the side of the exhaust gas recirculation valve (6) opposite the exhaust gas cooler,
**characterized in that**
a coolant duct segment (48) is arranged between the exhaust gas manifold or the engine block and the actuator (12) of the exhaust gas recirculation valve (6), the coolant duct segment being fluidically connected to the coolant jacket, wherein the pre-cooler (2) is arranged between the exhaust gas cooler and the exhaust gas manifold, as seen in the flow direction of the exhaust gas, at least one coolant duct (42, 44) being formed in the pre-cooler housing (4), via which the coolant duct segment (48) formed in the pre-cooler housing (4) is connected with the coolant jacket of the exhaust gas cooler.

2. The cooler arrangement as recited in claim 1, **characterized in that** two coolant duct segments (48) are provided between the engine block or the exhaust gas manifold and the actuator (12), said coolant duct segments being in fluid communication via connecting duct (50).

3. The cooler arrangement as recited in one of claims 1 to 2, **characterized in that** the pre-cooler housing is provided with at least one exhaust gas duct (16) having a 90° deflection, and at least one coolant duct (42, 44) is formed on two opposite respective sides of the at least one exhaust gas duct (16).

4. The cooler arrangement as recited in one of the preceding claims, **characterized in that** the at least one coolant duct (44) in the pre-cooler housing (4) extends from the coolant duct segment (48) between the engine block or the exhaust gas manifold and the actuator (12) along the 90° deflection in the pre-cooler housing (4) to the coolant jacket on a side of the exhaust gas cooler remote from the engine block or the exhaust gas manifold.

5. The cooler arrangement as recited in one of the preceding claims, **characterized in that** the exhaust gas recirculation valve (6) is a flap valve, wherein the shaft (8) of said valve is supported in the pre-cooler housing (4).

## Revendications

1. Dispositif de refroidissement pour raccordement à un collecteur d'échappement ou une sortie d'échappement d'un bloc moteur d'une machine à combustion interne, comprenant
un refroidisseur de gaz d'échappement avec un conduit d'échappement et un enveloppe de refroidissement, ledit refroidisseur de gaz d'échappement étant fixé au bloc moteur ou au collecteur d'échappement par un pré-refroidisseur (2),
une soupape de recirculation de gaz d'échappement (6) par laquelle on peut régler le courant de gaz d'échappement, et
un actionneur (12) par lequel on peut actionner ladite soupape de recirculation de gaz d'échappement (6) et qui est disposé au coté de ladite soupape de recirculation de gaz d'échappement (6), opposé au refroidisseur de gaz d'échappement,
**caractérisé en ce qu'**
un segment de conduit de refroidissement (48), en communication fluidique avec l'enveloppe de refroidissement dudit refroidisseur de gaz d'échappement, est disposé entre ledit collecteur d'échappement ou ledit bloc moteur et l'actionneur (12) de ladite soupape de recirculation de gaz d'échappement (6), ledit pré-refroidisseur (2) étant disposé, vu dans la direction d'écoulement des gaz d'échappement, entre ledit refroidisseur de gaz d'échappement et ledit collecteur d'échappement ou ledit bloc moteur, au moins un conduit de refroidissement (42, 44) étant formé dans le carter (4) du pré-refroidisseur, par lequel conduit ledit segment de conduit de refroidissement (48), formé dans le carter (4) du pré-refroidisseur, est raccordé à l'enveloppe de refroidissement dudit refroidisseur de gaz d'échappement.

2. Dispositif de refroidissement selon la revendication 1, **caractérisé en ce que** deux segments de conduit de refroidissement (48) sont formés entre ledit bloc moteur ou ledit collecteur d'échappement et ledit actionneur (12), segments qui sont en communication fluidique l'un avec l'autre à travers un conduit de liaison (50).

3. Dispositif de refroidissement selon les revendications 1 à 2, **caractérisé en ce que**, dans le carter (4) du pré-refroidisseur, au moins un conduit de gaz d'échappement (16) est formé avec une déviation de 90°, et au moins un conduit de refroidissement (42, 44) est formé, respectivement, à deux cotés opposés dudit au moins un conduit de gaz d'échappement (16).

4. Dispositif de refroidissement selon l'une quelconque des revendications précédentes, **caractérisé en ce que** ledit au moins un conduit de refroidissement (44) s'étend dans ledit carter (4) du pré-refroidisseur à partir dudit segment de conduit de refroidissement (48) entre ledit bloc moteur ou ledit collecteur d'échappement et ledit actionneur (12) le long de la déviation de 90° dans ledit carter (4) du pré-refroidisseur jusqu'à l'enveloppe de refroidissement au coté dudit refroidisseur de gaz d'échappement éloigné dudit bloc moteur ou dudit collecteur d'échappement.

5. Dispositif de refroidissement selon l'une quelconque des revendications précédentes, **caractérisé en ce que** ladite soupape de recirculation de gaz d'échappement (6) est une soupape à clapet, dont l'arbre (8) est supporté dans ledit carter (4) du pré-refroidisseur.
